# DEMANDE DE BREVET EUROPEEN

(11) **EP 0 552 094 A1**
(43) Date de publication de la demande: **21.07.1993**
(21) Numéro de dépôt: 93400062.1
(22) Date de dépôt: 13.01.1993
(51) Int. Cl.: H04N 7/00, H04N 5/38, H04N 7/20

(54) **Station de diffusion multistandard par réseau hertzien terrestre, pour télévision conventionnelle et télévision haute définition.**

(30) Priorité: 15.01.1992 FR 9200355
(71) Demandeur: THOMSON-LGT LABORATOIRE GENERAL DES TELECOMMUNICATIONS, F-78700 Conflans-Sainte Honorine (FR)
(72) Inventeur: Cluniat, Claude, F-92402 Courbevoie Cédex (FR); Bastard, Guy, F-92402 Courbevoie Cédex (FR)
(74) Mandataire: Courtellemont, Alain

(57) **Abrégé**

Station de diffusion multistandard de télévision conventionnelle et de télévision haute définition comportant une source (10) de signal de télévision conventionnel, PAL ou SECAM, couplée à un émetteur en bande de base, en fréquence intermédiaire (20), lui-même couplé à un étage d'amplification de puissance (30) dont la sortie est couplée à une antenne d'émission (50) par des moyens de couplage de sortie (40). La station comporte en outre un émetteur en bande de base (70) alimenté par une source de signal de télévision haute définition (60), dont la sortie est également couplée à l'entrée de l'étage d'amplification de puissance (30). Des moyens de commutation (80) comportent deux entrées reliées respectivement à l'émetteur en bande de base (20) de signal de télévision conventionnel et à l'émetteur en bande de base (70) de signal de télévision haute définition (70), et une sortie reliée à l'étage d'amplification de puissance (30) ; ces moyens de commutation (80) sont commandés par un boîtier de commande pour l'émission, en temps partagé, par l'antenne de la station, soit du signal de télévision conventionnel, soit du signal de télévision haute définition.

Application à la diffusion de la télévision haute définition par un réseau hertzien terrestre.

## Description

L'invention se rapporte au domaine de la diffusion de la télévision par voie hertzienne et a plus particulièrement pour objet une station de diffusion multistandard pour télévision conventionnelle et télévision haute définition, par réseau hertzien terrestre.

Les deux vecteurs de diffusion de la télévision haute définition actuellement en Europe sont le satellite d'une part et les réseaux câblés d'autre part. Ces deux vecteurs ne permettent pas d'assurer une diffusion suffisante de la télévision haute définition en Europe. En effet pour les systèmes de réception satellite il est nécessaire d'utiliser des antennes de dimensions supérieures à 1 mètre, ce qui confère à ce moyen de diffusion un coût élevé. De même les réseaux câblés nécessitent des infrastructures importantes et la croissance de ces réseaux est donc très lente. A court terme il paraît donc impossible en utilisant les moyens de diffusion actuels, d'assurer une diffusion correcte à la télévision haute définition, et ceci alors que l'on dispose des moyens de réception permettant à l'utilisateur de bénéficier des progrès acquis dans la qualité des images susceptibles d'être diffusées.

En diffusion hertzienne terrestre, les progrès obtenus dans la qualité d'image au moyen des standards D2MAC ou HDMAC sont très significatifs par rapport à la qualité des images des standards classiques SECAM ou PAL : les mesures montrent qu'à niveau de réception égal, une meilleure qualité est obtenue tant pour la vidéo que pour le son. De plus, l'amélioration obtenue par le standard HDMAC par rapport au D2MAC a été conçue pour que les réceptions D2MAC et HDMAC soient compatibles. Il est donc de la plus haute importance d'assurer dès maintenant une diffusion suffisante des images de meilleure définition que les images obtenues par les standards classiques, en diffusant au mieux dans un premier temps les images D2MAC puis la télévision HDMAC.

Cette approche est d'autant plus essentielle que l'on constate dans d'autres parties du monde que des développements des réseaux câblés et de la réception satellite font suite aux améliorations obtenues par la transmission de télévision de meilleure qualité par voie hertzienne terrestre. Il est donc essentiel d'assurer la diffusion terrestre des signaux de télévision améliorés, émis selon les standards D2MAC ou HDMAC.

La présente invention a pour objet de résoudre ce problème en proposant un système de diffusion de télévision sur réseau hertzien susceptible de transmettre la télévision haute définition, et permettant la réception de télévision haute définition avec des antennes normales de réception de télévision conventionnelle.

Selon l'invention, pour minimiser le coût des infrastructures, le système de diffusion de télévision utilise partiellement les réseaux hertziens préexistants, et les complète pour assurer une couverture très large du territoire par des émissions télévision haute définition.

Selon l'invention, il est proposé une station de diffusion multistandard par réseau hertzien terrestre, pour télévision conventionnelle et télévision haute définition, comportant une source de signal de télévision conventionnel, couplée à un émetteur en bande de base en fréquence intermédiaire, lui-même couplé à un étage d'amplification de puissance dont la sortie est couplée à une antenne d'émission par des moyens de couplage de sortie, caractérisée en que, l'étage d'amplification de puissance ayant une bande passante suffisante pour passer un signal de télévision haute définition, la station comporte en outre une source de signal de télévision haute définition couplée à un émetteur en bande de base dont la sortie est également couplée à l'entrée de l'étage d'amplification de puissance , la station comportant à cet effet des moyens de commutation ayant une première entrée reliée à la sortie vidéo de l'émetteur en bande de base de signal de télévision conventionnel et une seconde entrée reliée à la sortie de l'émetteur en bande de base de signal de télévision haute définition, et une sortie reliée à l'entrée de l'étage d'amplification de puissance, ces moyens de commutation étant commandés par un boîtier de commande pour l'émission par l'antenne soit du signal de télévision conventionnel, soit du signal de télévision haute définition.

L'invention sera mieux comprise et d'autres caractéristiques apparaîtront à l'aide de la description qui suit, en référence aux figures annexées qui illustrent :
- la figure 1 un premier mode de réalisation d'une station hertzienne de diffusion de télévision multistandard selon l'invention ;
- la figure 2 un deuxième mode de réalisation d'une station de diffusion hertzienne de télévision multistandard selon l'invention ;
- la figure 3 un mode de réalisation d'une source TVHD sécurisée utilisable dans l'un ou l'autre des deux modes de réalisation de stations selon les figures 1 et 2.

Pour la diffusion de la télévision haute définition sur un réseau hertzien, l'invention propose d'utiliser un réseau de diffusion de programmes de télévision par voie hertzienne déjà existant, par exemple un réseau SECAM en France, et d'effectuer sur les stations de ce réseau les adaptations nécessaires pour lui permettre de travailler en temps partagé pour la diffusion soit des signaux de télévision conventionnels, SECAM ou PAL, soit des signaux de télévision en haute définition.

En effet les stations d'émission par voie hertzienne actuelles,par exemple les stations en norme L SECAM, ne sont pas prévues pour passer des signaux à la norme TVHD car les émetteurs de base utilisés dans ces stations ne permettent pas de traiter les informations contenues dans la bande de base TVHD. Par contre les étages de puissance, à tubes ou à transistors, des divers équipements émetteurs utilisés dans certaines de ces stations permettent d'amplifier un signal composite TVHD car il se trouve que leur bande passante, actuellement supérieure à la bande strictement nécessaire pour les émetteurs SECAM ou PAL, permet de transmettre la bande TVHD.

Les signaux TVHD sont transmis actuellement par voie satellite ou par réseau câblé. Les moyens de transmission actuels permettent de véhiculer les signaux TVHD vers un centre émetteur ou réémetteur en garantissant la qualité nécessaire.

L'idée est donc d'utiliser dans la station de diffusion hertzienne soit l'émetteur en bande de base SECAM ou PAL préexistant, soit un émetteur en bande de base TVHD relié à une source de signal TVHD en bande de base, et à commuter l'un ou l'autre de ces émetteurs en bande de base sur les étages d'amplification de la station hertzienne préexistante, grâce à des moyens de commutation.

Pour que le système fonctionne, il est nécessaire de tenir compte également des sous-ensembles qui font suite aux étages d'amplification de la station hertzienne. Dans certains cas, lorsque les stations d'émission fonctionnent, pour l'amplification, en voies séparées, c'est-à-dire amplifient séparément une voie son et une voie image, ces voies après amplification sont regroupées sur une sortie unique, via un système de couplage raccordé à l'antenne d'émission hertzienne. Or la bande passante de tels moyens de couplage est suffisante pour permettre la transmission de la bande nécessaire à un signal TVHD si les moyens de couplage utilisent un coupleur 3dB, mais la bande est insuffisante si les moyens de couplage utilisent un diplexeur. Dans ce dernier cas, la sortie des étages d'amplification sera couplée au diplexeur pour l'émission en standard classique, SECAM ou PAL, mais des moyens de commutation seront également prévus en sortie des moyens d'amplification pour transmettre directement le signal amplifié TVHD à l'antenne d'émission, sans passer par le diplexeur de sortie de la station d'émission classique.

Comme indiqué ci-dessus cela n'est pas nécessaire dans le cas où la station hertzienne comporte, en sortie des moyens d'amplification, un coupleur 3dB large bande pour l'addition des voies image et son : le signal TVHD amplifié par l'étage d'amplification de l'émetteur classique peut alors être transmis via ce même coupleur du fait qu'un tel coupleur a une large bande et transmet donc sans dégradation de qualité le signal TVHD amplifié.

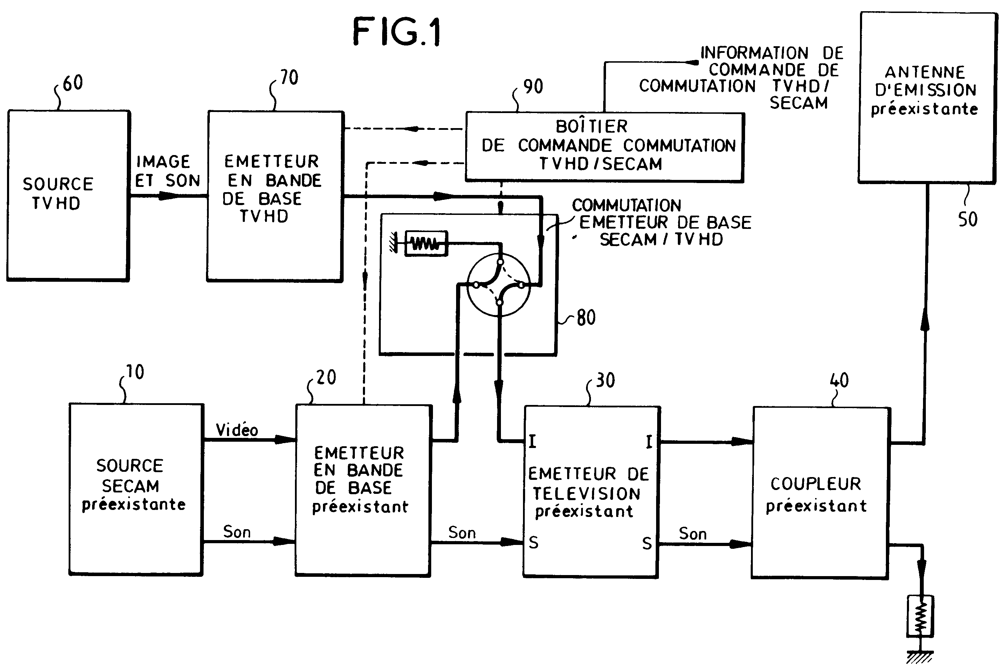

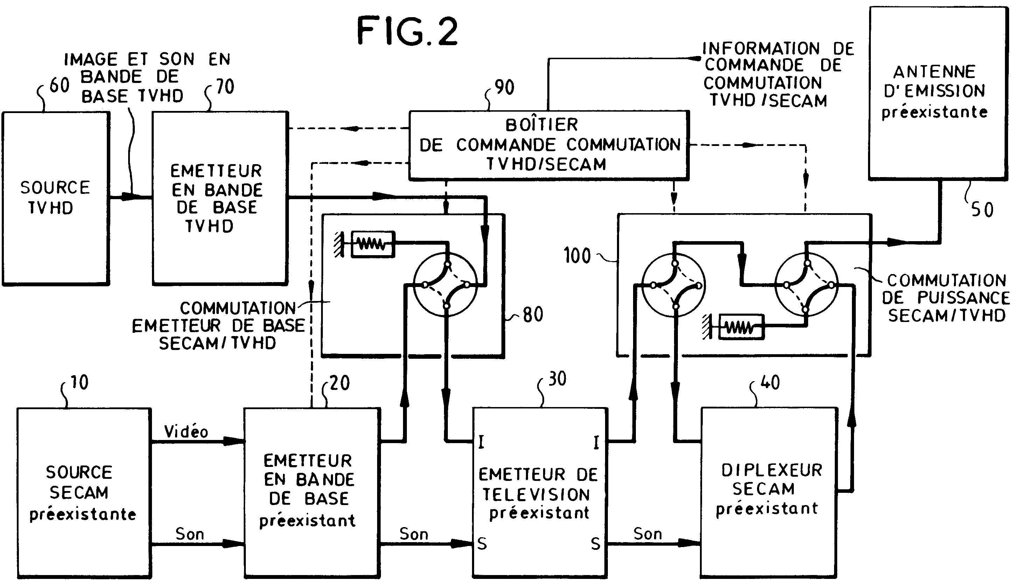

Les figures 1 et 2 se rapportent respectivement à ces deux structures. Sur ces figures les éléments correspondants ont été désignés par les mêmes repères et les éléments déjà utilisés pour la transmission de signaux conventionnels ont été dits préexistants.

La figure 1 illustre une station hertzienne pour la transmission en temps partagé de signaux de télévision conventionnels SECAM et de signaux TVHD. Cette station comporte les éléments de la station hertzienne classique c'est-à-dire une source 10 préexistante de signal SECAM qui peut être par exemple une station de réception satellite accordée sur le satellite TELECOM 1. Cette source 10 est reliée à un émetteur en bande de base SECAM préexistant, 20, c'est-à-dire à un sous-ensemble comportant des moyens de modulation en fréquence intermédiaire pour les signaux vidéo et son, un convertisseur pour transférer le signal à la fréquence d'émission, et un préamplificateur de puissance. La bande passante vidéofréquence de cet émetteur en bande de base SECAM est la bande 5,5 MHz du signal SECAM. Il est à remarquer que pour un émetteur PAL, l'émetteur en bande de base a la même bande passante, soit 5,5 MHz.

L'émetteur en bande de base 20 est couplé à un étage d'amplification de puissance préexistant, 30, qui amène le signal de télévision à la puissance d'émission c'est-à-dire par exemple à 10 kW, à 2,5 kW, ou à 0,5 kW au moyen d'un amplificateur à tubes, ou à 0,25 kW au moyen d'un amplificateur transistorisé. L'étage d'amplification 30, qui constitue un émetteur TV proprement dit, amplifie séparément l'image et le son dans les émetteurs SECAM norme L, et les deux signaux amplifiés vidéo et son sont transmis à un étage de couplage préexistant 40. Dans le mode de réalisation représenté sur la figure 1, cet étage de couplage 40 est un coupleur à 3dB qui est associé à une résistance d'équilibrage reliée à la masse. Les signaux sommés sont transmis à une antenne d'émission 50.

Comme indiqué ci-dessus une condition nécessaire à la mise en oeuvre de l'invention est que l'étage d'amplification de puissance de la station hertzienne support ait une bande passante suffisante pour passer le signal TVHD, ce qui est le cas des stations de certains réseaux hertziens terrestres préexistants.

Pour transmettre également la télévision haute définition, la station de diffusion hertzienne comporte en outre une source de signal TVHD en bande de base, 60, délivrant un signal composite haute définition image et son en bande de base, dont la bande est de 8 MHz pour un signal D2MAC et de 12MHz pour un signal HDMAC. Ce signal composite est transmis à un émetteur en bande de base TVHD, 70, qui comporte des moyens de modulation à fréquence intermédiaire, un convertisseur pour amener le signal à la fréquence d'émission par voie hertzienne, et un préamplificateur de puissance, cet émetteur de base étant adapté à la bande du signal vidéo composite à transmettre soit 8 ou 12 MHz. La sortie de l'émetteur 70 est couplée à l'entrée de l'étage d'amplification de puissance 30 de l'émetteur préexistant, via des moyens de commutation à relais, 80, couplés à la sortie de l'émetteur de base SECAM 20 préexistant; les moyens de commutation comportent un relais associé à une charge dont la liaison à la masse n'a pas été représentée. Un boîtier de commande 90, relié à une entrée de commande des moyens de commutation 80, commande le passage du standard classique SECAM au standard TVHD et vice versa. Ce boîtier de commande 90 est actionné par un opérateur. Il peut également être commandé de manière automatique à partir des informations contenues dans des lignes test transmises avec le signal TVHD issu de la source 60 de signal en bande de base TVHD. Ce boîtier de commande est également prévu pour couper l'alimentation de l'émetteur en bande de base SECAM, 20, pendant l'émission d'un signal TVHD, ou pour couper l'alimentation de l'émetteur en bande de base TVHD pendant l'émission d'un signal SECAM ; les lignes de commande de coupure ont été représentées en pointillés sur la figure. Les moyens de commutation 80 ont été représentés sur la figure 1 en position de transmission de signal TVHD. Un tracé en pointillés illustre, à l'intérieur du bloc 80, les connexions pour la transmission de signal SECAM. Les moyens de commutation 80 comportent une résistance de charge reliée à la masse pour l'absorption éventuelle de signaux résiduels non utiles.

La figure 2 illustre un deuxième mode de réalisation de la station de diffusion selon l'invention, comportant, là aussi, une source de signal en bande de base SECAM préexistante, 10, un émetteur en bande de base préexistant, 20, avec ses étages de modulation en fréquence intermédiaire et de conversion à la fréquence d'émission, un étage d'amplification de puissance préexistant 30, qui constitue un émetteur TV proprement dit, avec une première et une seconde entrée et une première et une seconde sortie, des moyens de couplage de sortie 40 et une antenne d'émission. Dans cette réalisation les moyens de couplage 40 sont constitués d'un diplexeur dont la bande est insuffisante pour transmettre le signal amplifié TVHD. La station comporte en outre une source de signal en bande de base TVHD, 60, reliée à un émetteur en bande de base TVHD, 70, dont la sortie est couplée à la première entrée de l'étage d'amplification de puissance 30 via des moyens de commutation à relais, 80, identiques à ceux de la figure 1 qui reçoivent également le signal vidéo issu de l'émetteur en bande de base SECAM, 20.

Dans ce mode de réalisation la station comporte en outre des seconds moyens de commutation à relais, 100, couplant la première sortie de l'étage d'amplification de puissance 30 soit à une entrée de signal vidéo du diplexeur 40 pour la transmission d'un signal SECAM, le diplexeur recevant alors la voie son sur une autre entrée, soit directement à l'antenne d'émission pour l'émission d'un signal TVHD. L'antenne d'émission doit donc être reliée soit directement à la première sortie de l'amplificateur de puissance 30, soit directement à la sortie du diplexeur 40 pour l'émission d'un signal SECAM. Dans ce but les moyens de commutation comportent un premier et un second relais en cascade et une charge connectée entre le second relais et la masse; le premier relais relie la sortie de l'amplificateur de puissance 30 soit à l'entrée du diplexeur 40 pour la transmission d'un signal vidéo SECAM, soit à l'entrée du second relais pour la transmission TVHD ; la sortie du second relais est reliée soit à la sortie du premier relais pour la transmission TVHD soit à la sortie du diplexeur 40 pour la transmission du signal composite SECAM à l'antenne. Dans le premier cas la sortie du diplexeur est couplée à la charge afin d'absorber les éventuels signaux résiduels de la voie SECAM.

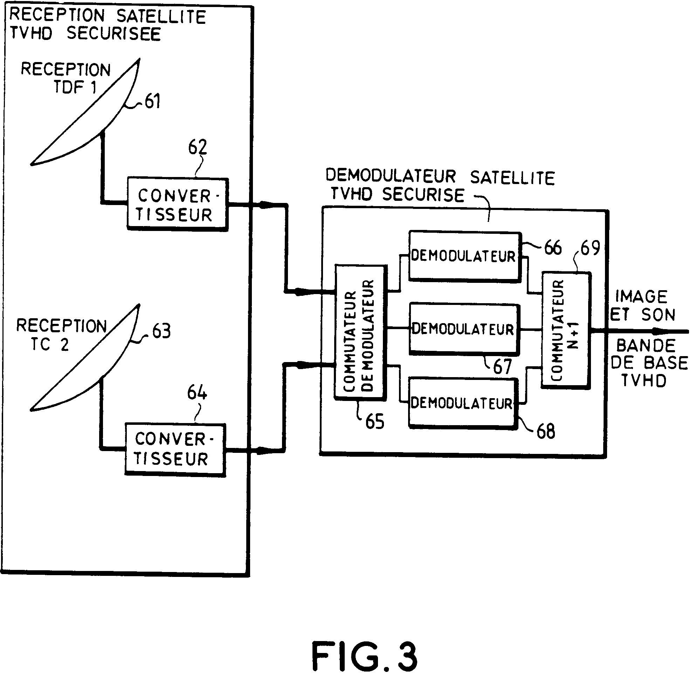

La figure 3 illustre un mode de réalisation particulier d'une source de signal TVHD en bande de base mettant en oeuvre une réception satellite sécurisée pour éviter tout problème de diffusion pendant les phases de diffusion TVHD. Actuellement les signaux D2MAC sont transmis par le satellite TDF1 et par le satellite TELECOM 2. Pour obtenir une transmission sécurisée, la source 60 est une station de réception satellite TVHD sécurisée comportant une antenne de réception satellite TDF1, 61, reliée à un convertisseur amplificateur, 62, à faible bruit et une antenne de réception satellite TELECOM 2, 63, également reliée à un convertisseur amplificateur 64, à faible bruit. Les sorties de ces deux convertisseurs à faible bruit sont reliées aux entrées d'un démodulateur satellite TVHD sécurisé qui comporte un commutateur répartiteur 65 à deux entrées reliées respectivement aux convertisseurs 62 et 64 et trois sorties reliées respectivement à trois démodulateurs, 66, 67 et 68. Les sorties de ces trois démodulateurs sont reliées à un commutateur 69 dit commutateur "N+1 ", avec ici N = 2 ; le démodulateur utilise les deux voies de réception possibles de la télévision haute définition au moyen des deux démodulateurs 66, 67 alors couplés aux deux voies de réception satellite, le démodulateur 68 étant prévu en secours, pour utiliser seulement l'une des voies de réception lorsque l'autre est en panne . La sortie du commutateur "N+1 " est la sortie de la source TVHD, 60 des figures 1 et 2.

Bien entendu d'autres sources de signal TVHD sont utilisables.

L'invention a été décrite, ci-dessus dans deux modes particuliers de réalisation, à partir d'émetteurs adaptés à la transmission SECAM. Le même principe est utilisable pour des émetteurs PAL existants, les moyens de commutation nécessaires entre l'émetteur de base TVHD et la sortie de l'émetteur de base PAL étant les mêmes.

Le système de diffusion, utilisant de telles stations permet d'assurer la diffusion d'images de qualité en substitution de certaines images utilisant des standards classiques, et fonctionne par partage de temps d'émission. Les améliorations de qualité sont perceptibles lors de la diffusion de TVHD même sur les récepteurs existants adaptés aux standards conventionnels et associés à des décodeurs D2MAC ou HDMAC externes grâce à une connexion PERITEL. Ces stations permettent en outre de mettre en évidence des différences de qualité encore plus importantes entre les images conventionnelles et les images TVHD reçues sur des récepteurs spécialisés TVHD compatibles avec les standards classiques. La source peut être également adaptée à une réception EUTELSAT.

## Revendications

1. Station de diffusion multistandard par réseau hertzien terrestre, pour télévision conventionnelle et télévision haute définition, comportant une source (10) de signal de télévision conventionnel, couplée à un émetteur en bande de base en fréquence intermédiaire (20), lui-même couplé à un étage d'amplification de puissance (30) dont la sortie est couplée à une antenne d'émission (50) par des moyens de couplage de sortie (40), caractérisée en que, l'étage d'amplification de puissance (30) ayant une bande passante suffisante pour passer un signal de télévision haute définition, la station comporte en outre une source de signal de télévision haute définition (60) couplée à un émetteur en bande de base (70) dont la sortie est également couplée à l'entrée de l'étage d'amplification de puissance (30), la station comportant à cet effet des moyens de commutation (80) ayant une première entrée reliée à la sortie vidéo de l'émetteur en bande de base (20) de signal de télévision conventionnel et une seconde entrée reliée à la sortie de l'émetteur en bande de base (70) de signal de télévision haute définition, et une sortie reliée à l'entrée de l'étage d'amplification de puissance (30), ces moyens de commutation (80) étant commandés par un boîtier de commande pour l'émission par l'antenne soit du signal de télévision conventionnel, soit du signal de télévision haute définition.

2. Station selon la revendication 1, caractérisée en ce que, les moyens de couplage de sortie (40) de l'amplificateur de puissance comportant un diplexeur dont la bande passante de transmission est insuffisante pour transmettre la bande de fréquence du signal de télévision haute définition, des seconds moyens de commutation (100) relient l'antenne d'émission (50) soit directement à la sortie de l'amplificateur de puissance (30) pour l'émission du signal de télévision haute définition, soit à la sortie du diplexeur (40) pour la transmission du signal de télévision conventionnel.

3. Station selon la revendication 1, caractérisée en ce que les moyens de couplage de sortie de l'amplificateur de puissance comportant un coupleur à 3dB, l'étage d'amplification de puissance (30) est couplé à l'antenne d'émission (50) via le coupleur à 3dB quel que soit la diffusion à effectuer.

4. Station selon l'une des revendications 1 à 3, caractérisée en ce que la source (60) de signal de télévision haute définition en bande de base est une source sécurisée comportant des moyens de réception (61 - 64) recevant les deux mêmes signaux de télévision haute définition de deux satellites différents, et un démodulateur (65-69) des deux signaux reçus des satellites, sécurisé, ce démodulateur utilisant, en fonctionnement normal, pour partie l'un et l'autre des deux signaux reçus et utilisant en cas de mauvais fonctionnement de l'un des deux satellites, celui des deux signaux reçus provenant du satellite continuant à fonctionner normalement.
